(19) Europäisches Patentamt
European Patent Office
Office européen des brevets

(11) Veröffentlichungsnummer: **0 166 889**
**A1**

(12) **EUROPÄISCHE PATENTANMELDUNG**

(21) Anmeldenummer: 85104863.7

(22) Anmeldetag: 22.04.85

(51) Int. Cl.[4]: **C 08 L 69/00**
//(C08L69/00, 67:02, 23:00)

(30) Priorität: 04.05.84 DE 3416476

(43) Veröffentlichungstag der Anmeldung: 08.01.86 Patentblatt 86/2

(84) Benannte Vertragsstaaten: DE FR GB IT NL

(71) Anmelder: BAYER AG
Konzernverwaltung RP Patentabteilung
D-5090 Leverkusen 1 Bayerwerk(DE)

(72) Erfinder: Nouvertné, Werner, Dr.
Scheiblerstrasse 95
D-4150 Krefeld(DE)

(72) Erfinder: Müller, Peter-Rolf, Dr.
Paul-Klee-Strasse 76
D-5090 Leverkusen(DE)

(54) **Polycarbonat-Polyalkylenterephthalat-Formmassen.**

(57) Gegenstand der vorliegenden Erfindung sind Formmassen bestehend aus halogenhaltigen Polycarbonaten, Polyalkylenterephthalaten und gegebenenfalls thermoplastischen Olefinpolymerisaten, die zusätzlich die üblichen Additive enthalten können.

EP 0 166 889 A1

Croydon Printing Company Ltd.

BAYER AKTIENGESELLSCHAFT 5090 Leverkusen, Bayerwerk
Konzernverwaltung RP
Patentabteilung PS/Em-c

Polycarbonat-Polyalkylenterephthalat-Formmassen

Gegenstand der vorliegenden Erfindung sind Formmassen bestehend aus

A) 50 Gew.-% bis 85 Gew.-%, vorzugsweise 55 Gew.-% bis 80 Gew.-% an thermoplastischem, aromatischem Polycarbonat, bezogen auf A) + B),

B) 50 Gew.-% bis 15 Gew.-%, vorzugsweise 45 Gew.-% bis 20 Gew.-% an thermoplastischem Polyalkylenterephthalat, bezogen auf A) + B), und gegebenenfalls

C) thermoplastischem Olefinpolymerisat in Mengen bis zu 4 Gew.-%, bezogen auf jeweils 100 Gew.-% aus A) + B),

dadurch gekennzeichnet, daß das Polycarbonat A) aromatisch gebundenes Brom und/oder Chlor in Mengen von 2 Gew.-% bis 15 Gew.-%, vorzugsweise 2 Gew.-% bis 9 Gew.-%, bezogen auf Polycarbonatkomponente A), und, an bifunktionellen Struktureinheiten nur solche der Formel (I)

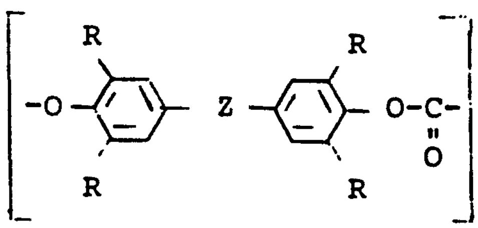

(I)

enthält, worin R H, Br oder Cl und Z $C_3$-$C_5$-Isoalkyliden, Cyclohexyliden oder eine Einfachbindung sind, und wobei

der Brom- und/oder Chlorgehalt aus den Struktureinheiten der Formel (I) resultiert.

Die erfindungsgemäßen Formmassen sind insbesondere geeignet zur Herstellung von Formteilen, für die eine hochglänzende Oberfläche, gute Wärmeformbeständigkeit und erhöhte Chemikalienbeständigkeit, insbesondere gegen aromatische Kohlenwasserstoffe, gefordert sind, wie dies beispielsweise beim Einsatz im Automobilsektor zur Herstellung von Scheinwerferreflektoren erforderlich sein könnte.

Bekannt war, Polycarbonate mit Polyalkylenterephthalaten abzumischen, um die Verarbeitbarkeit zu verbessern (siehe DE-PS 1 187 793). Halogenierte Polycarbonate sind hierbei nicht einbezogen.

Aus der DE-AS 1 694 124 sind Polycarbonate bekannt, denen man geringe Mengen bis zu 5 Gew.-% an Polyalkylenterephthalaten zumischt, um das Spannungsrißkorrosionsverhalten des Polycarbonats in kochendem Wasser zu verbessern. Als Polycarbonate können auch halogensubstituierte eingesetzt werden, ohne daß besondere Angaben dazu gemacht werden.

Bekannt ist auch, Polycarbonaten bis zu 30 Gew.-% Olefinpolymerisate zuzusetzen, wobei gegebenenfalls bis zu 40 Gew.-% dieser Olefinpolymerisate durch einen gesättigten Polyester ersetzt sind (siehe DE-AS 1 569 448). Die erhaltenen Formmassen sind als Imprägnier-, Klebe- oder

Überzugsmassen geeignet, sie haben verbesserte Eigenschaften bezüglich Schlagfestigkeit, Widerstandsfestigkeit gegenüber kochendem Wasser und verbesserte elektrische Eigenschaften (DE-AS, Spalte 7, Zeilen 20 - 25).

Bekannt ist auch Polycarbonate unter anderem mit Polyolefinen zu modifizieren, um eine verbesserte Kratzfestigkeit und Spannungsrißfestigkeit zu erzielen (siehe US-Patent 3 431 224).

In der DE-OS 3 118 697 werden Abmischungen aus Polyalkylenterephthalaten mit aromatischen Polycarbonaten beschrieben, die gegebenenfalls noch Polymerisate mit kautschukelastischen Eigenschaften enthalten, in denen die Polycarbonate mindestens teilweise aus o,o,o',o',-Tetramethylbisphenol-Polycarbonaten bestehen. Als weitere besonders bevorzugte Diphenole für die Polycarbonate sind auch Tetrachlorbisphenol-A und Tetrabrombisphenol-A genannt, jedoch in den Beispielen nicht eingesetzt.

Die Mengenangaben für die binären Mischungen aus Polycarbonaten, die nicht vollständig aus tetraalkylierten Bisphenolen aufgebaut sind, und Polyalkylenterephthalaten liegen zwischen 1 bis 99 Gew.-Teilen und 99 bis 1 Gew.-Teilen, (Seiten 6/7 der DE-OS) bzw. zwischen 5 bis 95 Gew.-Teilen und 95 bis 5 Gew.-Teilen (Seiten 27/28 der DE-OS); in diesen Grenzbereichen von 5 Gew.-% Polyalkylenterephthalat ist jedoch die geforderte Spannungsrißbeständigkeit des Polycarbonats noch nicht ausreichend verbessert; im anderen Grenzbereich von 95 Gew.-% Polyalkylenterephthalat liegen jedoch keine Polycarbonat-

Formmassen im eigentlichen Sinn mehr vor.

Die Mitverwendung von Polymerisaten mit kautschukelastischen Eigenschaften würde in Anbetracht der Verwendung der vorgesehenen erfindungsgemäßen Formmassen zu nicht ausreichend hochglänzenden Oberflächen führen, welche beispielsweise bei Metallbedampfung erwünscht sind, um derartige Formteile beispielsweise für Reflektoren einsetzen zu können. Die Verwendung von Polycarbonaten als Komponente A), die überwiegend oder völlig tetraalkylierte Diphenolat-Reste eingebaut enthalten, oder die zusätzliche Mitverwendung von Tetraalkylbisphenol-Polycarbonaten, führt zwar ebenfalls zur Vicatverbesserung. Der Nachteil ist jedoch, daß die tetraalkylierten Polycarbonate im Handel nicht erhältlich sind.

Die Formmassen gemäß DE-OS 3 118 697 können außerdem zur Erhöhung der Benzinfestigkeit bis zu 5 Gew.-Teile Ethylenhomo- bzw. Copolymerisate enthalten (Seiten 25 und 26 der DE-OS 3 118 697).

Aus der DE-OS 3 118 526 sind ebenfalls Mischungen aus Polycarbonaten, Polyalkylenterephthalaten bekannt, die jedoch immer Pfropfpolymerisate mit kautschukelastischen Eigenschaften mit enthalten. Als bevorzugte Diphenole sind für die Polycarbonate wiederum Tetrachlorbisphenol-A und Tetrabrombisphenol-A genannt; in den Beispielen sind jedoch keine halogenierten Polycarbonate eingesetzt.

Durch die Mitverwendung von Pfropfpolymerisaten bestehen für die Formmassen von DE-OS 3 118 526 die gleichen Nachteile, wie vorstehend im Falle der Mischungen gemäß DE-OS 3 118 697, die kautschukelastische Polymerisate mitverwenden. Die Formmassen gemäß 3 118 526 können außerdem zur Erhöhung der Benzinfestigkeit bis zu 5 Gew.-Teilen Ethylenhomo- bzw. Copolymerisate enthalten (Seite 21 der DE-OS 3 118 526).

Thermoplastische Polyalkylenterephthalate gemäß Komponente B) im Sinne der Erfindung sind Reaktionskomponenten aus aromatischen Dicarbonsäuren oder ihren reaktionsfähigen Derivaten (z.B. Dimethylestern oder Anhydriden) und aliphatischen, cycloaliphatischen oder araliphatischen Diolen und Mischungen dieser Reaktionsprodukte. Ihre Herstellung ist literaturbekannt.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Carl Hanser Verlag, München 1973).

Bevorzugte Polyalkylenterephthalate enthalten mindestens 80, vorzugsweise mindestens 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol- und/oder Butandiol-1,4-reste.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure und Cyclohexandiessigsäure.

Die bevorzugten Polyalkylenterephthalate können neben Ethylenglykol- bzw. Butandiol-1,4-resten bis zu 20 Mol-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylenpropandiol-1,3, Neopentylglykol, Pentan-diol-1,5, Hexandiol-1,6, Cyclohexan-dimethanol-1,4, 3-Methylpentandiol-2,4, 2-Methylpentandiol-2,4, 2,2,4-Trimethylpentandiol-1,3 und -1,6, 2-Ethylenhexandiol-1,3, 2,2-Diethylpropandiol-1,3, Hexandiol-2,5, 1,4-Di-(ß-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-ß-hydroxyethoxyphenyl)-propan und 2,2-Bis-(4-hydroxyphenoxyphenyl)-propan (DE-OS 2 407, 674, 2 407 776, 2 715 932).

Die Polyalkylenterephthalate können durch Einbau relativ kleiner Mengen 3- oder 4-wertiger Alkohole oder 3- oder 4-basischer Carbonsäuren, wie sie z.B. in der DE-OS 1 900 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit.

Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Die als Komponente B) vorzugsweise verwendeten Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gew.-Teile) bei 25°C.

Thermoplastische Olefinpolymerisate gemäß Komponente C) der vorliegenden Erfindung sind Olefin(co)-polymere, die beispielsweise in bekannten Hochdruckverfahren mit Hilfe radikalischer Initiatoren, in bekannten Mitteldruck- oder Niederdruckverfahren mit Metallkomplexkatalysatoren, beispielsweise vom Ziegler-Natta-Typ, oder in Lösungs- oder Suspensionspolymerisationsverfahren ebenfalls an Metallkomplexkatalysatoren hergestellt worden sind. Als Monomere seien Olefine mit 2 - 8, bevorzugt 2 - 4 C-Atomen und einer olefinischen Doppelbindung genannt, wobei die olefinische Doppelbindung sich bevorzugt endständig befindet. Beispiele hierfür sind Ethylen, Propylen, Butene, Isobuten, Hexene und Octene. Als Comonomere seien außer den bereits als Monomere genannten Olefinen noch Vinylester, wie Vinylacetat, Vinylpropionat oder Vinylbutyrat, sowie Acrylsäureester, wie Acrylsäuremethylester oder Acrylsäureethylester, genannt. Beispiele für solche erfindungsgemäß einsetzbaren Olefin(co)polymere sind: Polyethylen hoher Dichte (HDPE), Polyethylen niederer Dichte (LDPE), Polypropylen, Polybutylen, Polyisobutylen, Ethylen-propylen-copolymere, Ethylen-butylencopolymere, Ethylen-hexen-copolymere, Ethylen-octencopolymere und Propen-buten-copolymere. Beispiele für Olefin-vinyl-copolymere sind Ethylen-vinylacetatcopolymere; Beispiele für Olefin-Acryl-copolymere sind Ethylenacrylsäureester-copolymere. Der Gehalt an Vinylmonomerem und Acrylmonomerem im Olefincopolymerem liegt von 1 - 30 Gew.-%, bevorzugt von 3 - 20 Gew.-% und besonders bevorzugt von 5 - 18 Gew.-%.

Geeignet sind auch styrolgepfropfte Copolymerisate eines der vorstehend genannten Olefinhomopolymeren oder Olefincopolymeren, wobei der Styrolgehalt weniger als 50 Gew.-%, bezogen auf Gewicht Pfropfpolymerisat, beträgt.

In bevorzugter Weise werden Hochdruckpolyethylene mit niederer Dichte (LDPE), nach dem Hochdruckverfahren hergestellte Ethylen-vinyl-acetat-copolymere (EVA) sowie niederdichtes LLDPE (Linear Low Density Polyethylene), worunter Copolymere von Ethylen mit Buten-1, Hexen-1 oder Octen-1 verstanden werden, eingesetzt. In besonders bevorzugter Weise werden LDPE und EVA-Typen eingesetzt. Die EVA-Typen haben einen Vinylacetat (VA)-Gehalt im Rahmen der oben angegebenen Comonomeren-Gehalte, wobei der Vinylacetatgehalt in ganz bevorzugter Weise von 8 - 18 Gew.-% beträgt.

Derartige Olefinpolymerisate sind literaturbekannt (siehe beispielsweise DE-AS 1 569 448), ebenso ihre Herstellung.

Bevorzugte thermoplastische, aromatische Polycarbonate gemäß Komponente A) sind solche mit Struktureinheiten der Formel (I), worin -Z-

$-\overset{CH_3}{\underset{CH_3}{C}}-$ oder Cyclohexyliden ist.

Die Molekulargewichte $\bar{M}w$ (Gewichtsmittel) der Polycarbonate gemäß Komponente A) liegen zwischen 10.000 und 100.000, vorzugsweise zwischen 20.000 und 80.000, wobei $\bar{M}w$ nach der Lichtzerstreuungsmethode in bekannter Weise ermittelt ist oder über die rel. Viskosität, die in $CH_2Cl_2$ bei 25°C und einer Konzentration von 0,5 g in 100 ml $CH_2Cl_2$ bestimmt ist, ermittelt werden kann.

Die Einstellung der Molekulargewichte der erfindungsgemäß einsetzbaren Polycarbonate gemäß Komponente A) erfolgt in bekannter Weise durch den Einsatz von gezielten Mengen an Kettenabbrechern bei der Herstellung der Polycarbonate.

Die Herstellung der Polycarbonate gemäß Komponente A) kann in bekannter Weise nach dem Phasengrenzflächenverfahren erfolgen (siehe beispielsweise H. Schnell, Chemistry and Physics of Polycarbonates, Interscience Publishers, 1964, New York, London, Sydney), wobei der jeweils einzustellende Brom- und/oder Chlorgehalt von 2 bis 15 Gew.-% das Verhältnis der bromierten und/oder chlorierten Diphenole der Formel (II) zu den anderen Diphenolen der Formel (II) bestimmt,

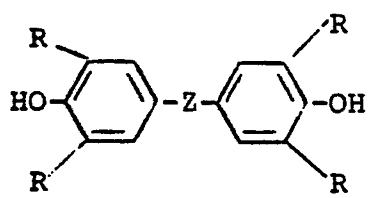

(II)

wobei quantitative Umsetzung der Diphenole vorausgesetzt werden kann.

In der Formel (II) entspricht die Bedeutung für R und Z der der Formel (I).

Anstelle von einem Polycarbonat als Komponente A) können auch thermoplastische Gemische aus mehreren aromatischen Polycarbonaten als Komponente A) eingesetzt werden, also beispielsweise thermoplastische Gemische aus aromatisch gebundenem Brom und/oder Chlor enthaltenden aromatischen

Polycarbonaten mit halogenfreien, thermoplastischen aromatischen Polycarbonaten, wobei der Gehalt an aromatisch gebundenem Brom und/oder Chlor des Polycarbonatgemisches wiederumg 2 Gew.-% bis 15 Gew.-%, vorzugsweise 2 Gew.-% bis 9 Gew.-%, beträgt. Im Falle des Einsatzes von thermoplastischen Gemischen aus halogenierten Homopolycarbonaten mit halogenfreien Polycarbonaten als Komponente A), haben die halogenierten Polycarbonate vorzugsweise ein Molekulargewicht $\bar{M}w$ von 4000 bis 18 000.

Die Herstellung der erfindungsgemäßen Abmischungen aus den Komponenten A), B) und gegebenenfalls C) kann in bekannter Weise durch Mischen der Schmelzen der Komponenten beispielsweise in Ein- oder Doppelwellenextrudern vorgenommen werden.

Die erfindungsgemäßen Gemische können noch übliche Additive für thermoplastische Polycarbonate oder thermoplastische Polyester oder für Olefinpolymerisate, nämlich übliche Stabilisatoren gegen Hitze, UV-Einwicklung oder Feuchtigkeit, Gleitmittel, Entformungsmittel, Nukleiermittel, Füllstoffe, Verstärkungsstoffe, Flammschutzmittel und/oder Farbstoffe enthalten, wobei diese entweder vorab den einzelnen Komponenten oder bei der Abmischung der Komponenten zu den erfindungsgemäßen Formmassen zugesetzt werden können.

Die Formmassen gemäß vorliegender Erfindung können zu beliebigen Formkörpern in bekannter Weise verarbeitet werden, beispielsweise zu Folien, Platten, Spritzgußformteilen.

Die erfindungsgemäßen Formmassen finden z.B. Verwendung als Scheinwerferreflektoren im Kraftfahrzeug-Sektor.

Beispiele

Für die in Aussicht genommene Anwendung auf dem Kraftfahrzeug-Sektor ist vor allem die Beständigkeit gegen Kraftstoffe von großer Bedeutung.

Prüfkörper aus den erfindungsgemäßen Mischungen wurden im Biegestreifenverfahren in Anlehnung an DIN 53 449, Teil 3 getestet.

| | |
|---|---|
| Testflüssigkeit: | Isooctan-Toluol 8:2 |
| Randfaserdehnung: | 0,6 % |
| Tauchzeit: | 5 Minuten |
| Beurteilungskriterien: | Nach dem Test dürfen keine Spannungsrisse sichtbar sein. |

Neben der Beständigkeit gegen Aromaten enthaltende Kraftstoffe ist eine ausreichende Wärmeformbeständigkeit (ähnlich Polycarbonat) erforderlich. Als Maß hierfür wurde die Vicat-Erweichungstemperatur nach DIN 53 460/ISO 306 gewählt.

| | |
|---|---|
| Komponente 1: | Bisphenol A-Polycarbonat mit einer relativen Lösungsviskosität von 1,297 |
| Komponente 2: | Halogeniertes Bisphenol A-Polycarbonat mit 5,6 Gew.-% Brom und einer rel. Lösungsviskosität von 1,295 |

Komponente 3: Polybutylenterephthalat
Intrinsic viscosity: 1,247

Komponente 4: Polyethylenterephthalat
Intrinsic viscosity: 1,05

Komponente 5: Polyethylen (HDPE) einer Dichte von 0,962 g/$cm^3$ (MFI 190/2:7 g/10 Min).

| Formmasse | bestehend aus | Spannungsrisse nach Kontakt m. Isooctan/ Toluol | Vicat-Erweichungs-temperatur (VST/B) |
|---|---|---|---|
| 1 | 95 Gew.-% Komponente 2 | ja | 149 |
| | 5 Gew.-% " 3 | | |
| 2 | 85 Gew.-% Komponente 2 | nein | 142 |
| | 15 Gew.-% " 3 | | |
| 3 | 80 Gew.-% Komponente 2 | nein | 141 |
| | 20 Gew.-% " 3 | | |
| 4 | 60 Gew.-% Komponente 2 | nein | 144 |
| | 40 Gew.-% " 3 | | |
| 5 | 58 Gew.-% Komponente 2 | nein | 143 |
| | 40 Gew.-% " 3 | | |
| | 2 Gew.-% " 5 | | |
| 6 | 60 Gew.-% Komponente 2 | nein | 156 |
| | 40 Gew.-% " 4 | | |
| 7 | 80 Gew.-% Komponente 1 | nein | 130 |
| | 20 Gew.-% " 3 | | |
| 8 | 70 Gew.-% Komponente 1 | nein | 128 |
| | 30 Gew.-% " 3 | | |
| 9 | 100 Gew.-% Komponente 1 | ja | 148 |

Patentansprüche

1. Formmassen bestehend aus

A) 50 Gew.-% bis 85 Gew.-% an thermoplastischem, aromatischem Polycarbonat, bezogen auf A) + B),

B) 50 Gew.-% bis 15 Gew.-% an thermoplastischem Polyalkylenterephthalat, bezogen auf A) + B) und gegebenenfalls

C) thermoplastischem Olefinpolymerisat in Mengen bis zu 4 Gew.-%, bezogen jeweils auf 100 Gew.-% aus A) + B),

dadurch gekennzeichnet, daß das Polycarbonat A) aromatisch gebundenes Brom und/oder Chlor in Mengen von 2 Gew.-% bis 15 Gew.-%, bezogen auf Polycarbonatkomponente A), und an bifunktionellen Struktureinheiten nur solche der Formel (I)

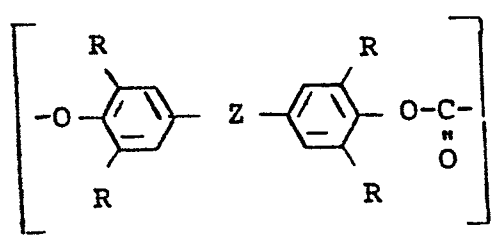

(I)

enthält, worin R, H, Br oder Cl und Z $C_3$-$C_5$-Isoalkyliden, Cyclohexyliden oder eine Einfachbindung sind, und wobei der Brom- und/oder Chlorgehalt aus den Struktureinheiten der Formel (I) resultiert.

2. Formmassen gemäß Anspruch 1, dadurch gekennzeichnet, daß A) in Mengen von 55 Gew.-% bis 80 Gew.-% und B) in Mengen von 45 Gew.-% bis 20 Gew.-% vorliegt.

3. Formmassen gemäß Ansprüche 1 und 2, dadurch gekennzeichnet, daß der Gehalt an Brom und/oder Chlor der Komponente A) 2 Gew.-% bis 9 Gew.-% beträgt.

4. Formmassen gemäß Ansprüche 1 bis 3, dadurch gekennzeichnet, daß als Komponente A) ein thermoplastisches Gemisch aus halogenfreien thermoplastischen, aromatischen Polycarbonaten und halogenhaltigen, aromatischen Polycarbonaten verwendet wird.

5. Formmassen gemäß Ansprüche 1 bis 4, dadurch gekennzeichnet, daß sie zusätzlich Stabilisatoren und/oder Gleitmittel und/oder Entformungsmittel und/oder Nukleiermittel und/oder Füllstoffe und/oder Verstärkungsstoffe und/oder Flammschutzmittel und/oder Farbstoffe enthalten.

Europäisches Patentamt

# EUROPÄISCHER RECHERCHENBERICHT

0166889

Nummer der Anmeldung

EP 85 10 4863

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | US-A-4 170 587 (M. SCHMIDT u.a.)<br>* Ansprüche 1-15 *<br>--- | 1-5 | C 08 L 69/00 //<br>(C 08 L 69/00<br>C 08 L 67:02<br>C 08 L 23:00 ) |
| D,X | EP-A-0 064 689 (BAYER)<br>* Ansprüche 1,4,5,9; Seite 7, Zeilen 1-16; Seite 1, Zeile 14 - Seite 2, Zeile 2 *<br>--- | 1-5 | |
| X | FR-A-2 343 023 (GENERAL ELECTRIC)<br>* Ansprüche 1-10 *<br>--- | 1-5 | |
| A | GB-A-2 118 193 (ANIC SPA)<br>* Ansprüche 1-4; Seite 1, Zeilen 1-10 *<br>----- | 1,5 | |
| | | | RECHERCHIERTE SACHGEBIETE (Int. Cl.4) |
| | | | C 08 L |

Der vorliegende Recherchenbericht wurde für alle Patentansprüche erstellt.

| Recherchenort | Abschlußdatum der Recherche | Prüfer |
|---|---|---|
| DEN HAAG | 22-08-1985 | DECOCKER L. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82